# EUROPÄISCHE PATENTSCHRIFT

(11) **EP 1 455 209 B1**
(45) Veröffentlichungstag und Bekanntmachung des Hinweises auf die Patenterteilung: **14.03.2007**
(21) Anmeldenummer: 03004923.3
(22) Anmeldetag: 07.03.2003
(51) Int. Cl.: G02B 6/46

(54) **Anschlussdose für Glasfaserkabel**
Connection box for optical fibre cable
Boîte de connexion pour câble à fibre optique

(43) Veröffentlichungstag der Anmeldung: 08.09.2004
(73) Patentinhaber: Feller AG, 8810 Horgen (CH)
(72) Erfinder: Imlig, Martin, 6410 Goldau (CH); Zehnder, Rolf, 8912 Obfelden (CH); Surer, Andreas, 8730 Uznach (CH)
(74) Vertreter: Blum, Rudolf Emil

(56) Entgegenhaltungen:
- WO-A-99/48171
- DE-A- 19 648 780
- DE-U- 29 922 165
- FR-A- 2 688 897
- US-A- 5 645 449
- US-A- 5 838 858
- PATENT ABSTRACTS OF JAPAN vol. 1997, no. 09, 30. September 1997 (1997-09-30) & JP 09 127369 A (NIKKO DENKI SEISAKUSHO:KK;NIPPON TELEGR & TELEPH CORP <NTT>), 16. Mai 1997 (1997-05-16)
- EP 622868 A2 (G<tz, Klaus Peter et al.) 2 November 1994

## Beschreibung

Die Erfindung betrifft eine Anschlussdose für Signalkabel gemäss Oberbegriff des Anspruchs 1. Ferner betrifft die Erfindung ein Montageset umfassend eine Anschlussdose und einen Montagerahmen.

Installationsdosen für Hausinstallationen, die das Anschliessen von Signalkabeln an die hausseitige Signalinstallation erlauben sind bekannt. Es kann sich dabei um wandseitig als Unterputzanschlussdosen oder Aufputzanschlussdosen zu montierende Dosen handeln. Auch die Montage an einem Kabelkanal ist möglich. Die Dosen dienen zum Anschluss beliebiger Signalleitungen, insbesondere aber von Glasfaserkabeln und Koaxialkabeln über entsprechende Steckverbinder. Diese umfassen dosenseitige Signalkabelanschlussteile, in oder an die von ausserhalb der Dose entsprechende Steckerteile einsteckbar sind. Solche Installationsdosen sind z.B. aus US-A-5 645 449 oder DE-A-43 09 350 bekannt. Bei einer auf dem Markt befindlichen Dose ragen von deren wandseitigen Montageplatte Zapfen ab, an denen eine rechtwinklig zur Wand gehaltene, auswechselbare Anschlussplatte eingeschoben werden kann. Diese Anschlussplatte trägt die dosenseitigen Signalkabelanschlussteile, wobei die Anschlussplatte der jeweiligen Steckverbindung entsprechende Ausnehmungen aufweist und zur Befestigung der dosenseitigen Kabelanschlussteile bzw. Steckerteile dient. Durch jeweilige Wahl der Anschlussplatte kann die Dose für verschiedenste Signalkabelsteckverbindungen verwendet werden. Eine nach unten hin offene Abdeckhaube schliesst die Dose frontseitig ab und erlaubt das Einstecken von Kabelsteckern mit daran angeschlossenen Signalkabeln von unten her. DE-A-196 48 780 und DE-U-299 22 165 zeigen Anschlussdosen gemäss Oberbegriff, bei denen der Abdeckrahmen durch die Abdeckkappe befestigt wird. WO 99/48171 zeigt eine Anschlussdose, bei der ein separater Rahmen und eine Abdeckhaube fehlt. JP-A-09127369 bzw. Patent Abstracts of Japan, Vol. 1997, Nr. 09, 30. September 1997, zeigen eine Anschlussdose, bei welcher der Rahmen durch die Abdeckkappe fixiert wird. FR-A-2 688 897 und US-A-5 838 858 zeigen ebenfalls Anschlussdosen. US-A-4 669 802 zeigt eine Anschlussdose, bei der eine Abdeckung direkt über dem Dosenbecher vorgesehen ist, an welchem ein Montagebügel für die dosenseitigen Steckerelemente befestigt ist. US-A-4 611 887 zeigt eine Anschlussdose, bei der ein Halteteil für ein spezielles Anschlussteil einstückig mit der Abdeckung ausgeführt und mittels dieser befestigt ist.

Der Erfindung liegt die Aufgabe zu Grunde, eine verbesserte Anschlussdose zu schaffen.

Dies erfolgt bei der Anschlussdose der eingangs genannten Art mit den kennzeichnenden Merkmalen des Anspruchs 1.

Dadurch, dass die Anschlussplatte an einem separaten Halteteil angeordnet ist, kann eine einfache Montage der dosenseitigen Signalkabelanschlussteile erfolgen und zugleich wird die Abdeckung, insbesondere ein Abdeckrahmen oder eine Aufputzkappe, bei der Montage auf einfache Weise befestigt.

Bevorzugterweise kann das Halteteil die Anschlussplatte so tief unterhalb der Grundplatte bzw. dem Befesligungselement plazieren, dass auch für diesbezüglich empfindliche Kabel (Glasfaserkabel, Koaxialkabel und Kupferkabel aller Art) deren minimale Biegeradien in der Dose nicht unterschritten werden.

Bevorzugterweise ist die selbe Anschlussplatte, die im Halteteil der Dose befestigbar ist, auch in einem Montagerahmen befestigbar, der die Anschlussplatte bei einer Unterflur-, Bodentank- oder Bodendoseninstallation verwendbar macht. Auf diese Weise kann die für die Befestigung bestimmter Signalkabelanschlussteile ausgestattete Anschlussplatte sowohl in der Anschlussdose als auch mit dem Montagerahmen verwendet werden, wodurch ein universell anwendbarer Montagesatz aus wahlweise mit der selben Anschlussplatte verwendbarer Anschlussdose und Montagerahmen geschaffen wird.

Im folgenden werden Ausführungsbeispiele der Erfindung anhand der Zeichnungen näher erläutert. Dabei zeigt
Figur 1 eine schaubildliche Darstellung der Einzelteile einer Unterputzdose mit dosenseitigen Signalkabeln und Signalkabelanschlussteilen;
Figur 2 eine Schnittdarstellung einer Dose gemäss Figur 1 an einer Wand;
Figur 3 eine Ansicht der Dose gemäss Figur 1 an einer Wand; und
Figur 4 einen Montagerahmen zur Montage der Anschlussplatte der Dose bei Unterflurmontage.

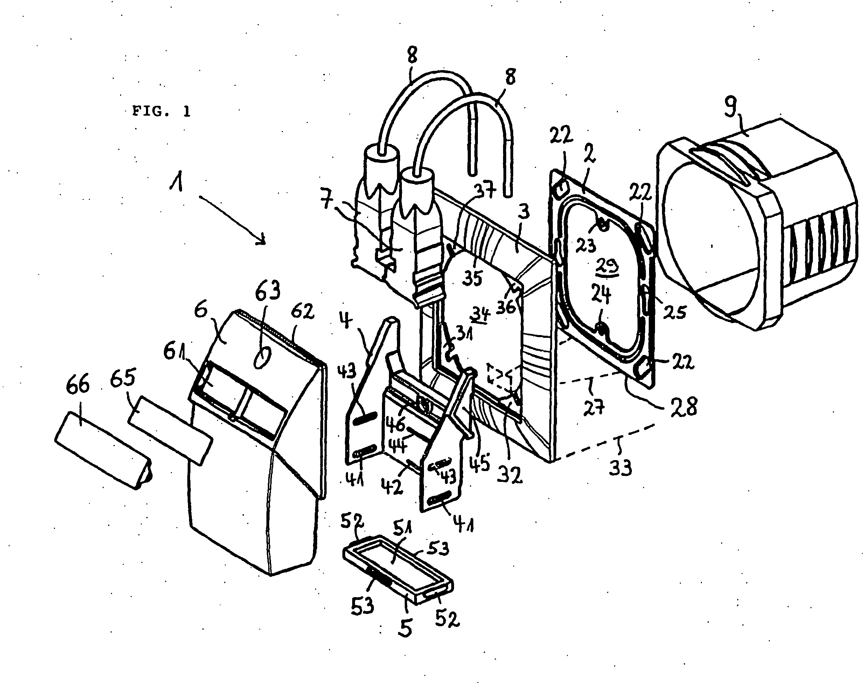

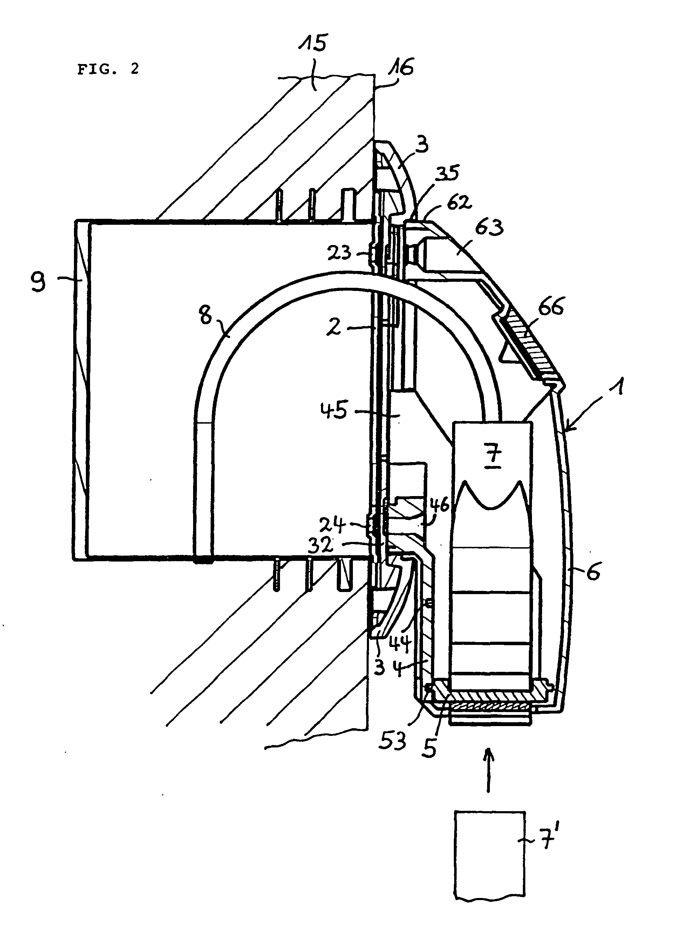

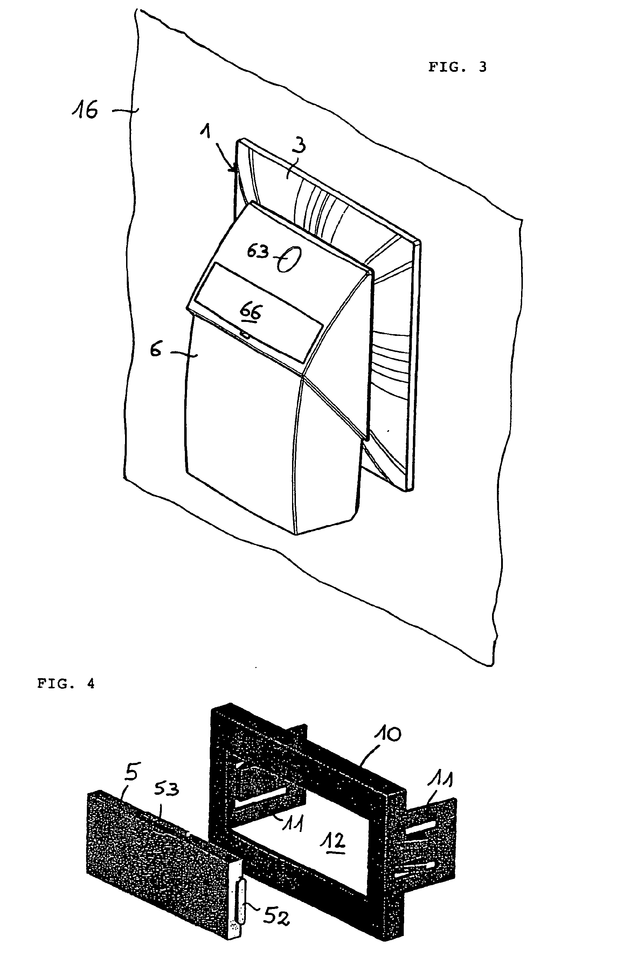

Figur 1 zeigt in schaubildlicher Darstellung die Einzelteile einer erfindungsgemässen Anschlussdose, welche in diesem Fall als Unterputzanschlussdose ausgestaltet ist. Die Figuren 2 und 3 zeigen dieselbe Dose in zusammengebautem und an der Wand befestigten Zustand. Die Unterputzdose gemäss den Figuren weist dabei ein wandseitiges Befestigungselement 2 auf, welches im Falle der Unterputzdose als Platte mit einer zentralen Ausnehmung 29 ausgeführt ist. Die Befestigungsplatte 2 wird dabei über einer Wandausnehmung an der Wand befestigt, wobei in die Wandausnehmung die wandseitig verlaufenden Signalkabel 8 münden, wie in Figur 2 ersichtlich. In der wandseitigen Ausnehmung kann ein Becher 9 angeordnet sein. Figur 2 zeigt einen Schnitt durch die Wand 15 mit deren Vorderseite 16, an welcher die Befestigungsplatte 2 befestigt ist, wobei dies üblicherweise mittels Schrauben erfolgt, die durch die Schraubenlöcher 22 der Platte 2 hindurch in die Wand geschraubt werden. Bei der Ausgestaltung als Unterputzdose ist ein Rahmen 3 als Abdeckung vorgesehen, welcher Rahmen in zusammengebautem Zustand das Befestigungselement 2 bzw. die Platte 2 übergreift und abdeckt. Durch diese Abdeckung bzw. den Rahmen 3 werden die Anschlüsse der Dose weiter von der Wand beabstandet und der Rahmen ergibt ferner eine gute Kombinierbarkeit mit anderen Anschlussdosen, z.B. für Netzspannung, welche ebenfalls mit Rahmen ausgerüstet sind. Der Rahmen 3 besteht dabei in der Regel aus einem Kunststoffteil, das in verschiedenen Farben und allenfalls auch Formen verfügbar sein kann und dadurch die Anpassung der Dosengestaltung an verschiedene Wünsche erlaubt. Es kann sich auch um einen Mehrfach-Rahmen handeln, der 2, 3 oder 4 Dosen gemeinsam ist, was bekannt ist. Die Platte 2 hingegen besteht vorzugsweise aus Metall, um eine gute Wandbefestigung und weiter eine stabile Dosenbefestigung zu ergeben, wie dies noch erläutert wird. Die Abdeckung 3 ist im Falle einer Aufputzdose, bei welcher also die Wandausnehmung und der Wandbecher 9 entfällt, eine eigentliche Aufputzkappe, wie dies in Figur 1 mit der unterbrochenen Linie 33 angedeutet ist, welche darstellen soll, dass eine Aufputzkappe eine entsprechend sich nach hinten zur Wand hin erstreckende Wandung aufweisen würde, so dass die Abdekkung 3 entsprechend becher- oder haubenförmig ausgestaltet wäre. In diesem Fall würde das Befestigungselement 2 in seinem unteren und oberen Bereich abgewinkelte Träger aufweisen, wie dies im unteren Bereich mit unterbrochenen Linien 27 angedeutet ist, so dass sich ein in Seitenansicht im wesentlichen u-förmiges Befestigungselement 2 ergeben würde, welches zum Halten der Abdeckung in der angedeuteten Haubenform ausgestaltet ist. In den weiteren erläuterten Aspekten unterscheidet sich hingegen die Aufputzvariante nicht von der Unterputzvariante und nachfolgend erfolgt die Beschreibung anhand der in den Figuren dargestellten Unterputzvariante. Eine weitere mögliche Variante, welche die Dose als Dose für Kabelkanal-Installationen betrifft ist sehr ähnlich der Unterputzvariante, wobei die Befestigungsplatte 2 lediglich so geändert ist, dass sie über einem Anschlusskasten im Kanal befestigt werden kann. Die Aspekte der Erfindung bleiben sich dabei aber dieselben.

Es ist nun weiter ersichtlich, dass die Abdeckung 3 bzw. der Rahmen 3 durch ein Halteteil 4 an der Befestigungsplatte 2 befestigbar ist. Dasselbe würde auch für die nur angedeutete Aufputzkappe 3 und 33 und das nur angedeutete bügelförmige Befestigungselement 2 und 27 gelten. Das Halteteil 4 weist dabei Fixationsteile 45 auf, welche an entsprechenden Gegenflächen 31 und 32 der Abdeckung 3 angreifen, wodurch die Abdeckung 3 gegen die Wand gepresst wird, wenn das Halteteil 4 am Befestigungselement 2 befestigt wird. Im gezeigten Beispiel erfolgt diese Befestigung mittels einer nicht dargestellten Schraube, welche durch das Schraubenloch 46 des Halteteils 4 in das mit einem Gewinde versehene Schraubenloch 24 des Befestigungselementes 2 eingeführt und dort festgeschraubt werden kann. Es ergibt sich somit durch Festschrauben des Halteteils 4 eine Fixation der Abdeckung 3, bzw. des Rahmens 3. Allenfalls kann das Halteteil 4, 45 zusätzlich in Ausnehmungen 25 der Platte eingreifen. Dasselbe gilt entsprechend für die Aufputzkappe 3 und 33 bei der Aufputzmontage, wobei in diesem Fall das Schraubenloch 24 am vorderen freien und abgewinkelten Ende des Bügels 27 vorgesehen wäre. Natürlich ist die Befestigung des Halteteils 4 am Befestigungselement 2 mittels einer Schraube nur als Beispiel zu betrachten. Es ist auch möglich, eine Rastverbindung vorzusehen, wodurch das Halteteil 4 am Befestigungselement 2 durch einander entsprechende Rastmittel befestigt werden kann. Bevorzugt ist indes die Schraubverbindung, da sie eine Positionierung der Abdeckung 3 vor der endgültigen Befestigung erlaubt. Diese kann erleichtert werden, wenn das Halteteil 4 wie in der Figur gezeigt, in einen abgesetzten Bereich des Rahmens eingreift und diesen dadurch entsprechend auch positioniert.

Das Halteteil weist nun weiter eine Anschlussplatte 5 auf, welche in dem gezeigten Beispiel an dem Halteteil 4 lösbar befestigt ist, indem die Anschlussplatte 5 mittels länglicher Zapfen 52 und 53 in entsprechende Ausnehmungen 41 und 42 des Halteteils 4 eingeschnappt werden kann. Das Halteteil 4 besteht dabei vorzugsweise aus einem beschränkt elastisch federnden Kunststoff, was das entsprechende Montieren und Demontieren der Anschlussplatte 5 erleichtert, und es ist bevorzugt einstückig ausgeführt. Die Anschlussplatte 5 weist ein Anschlussfeld 51 auf, welches in dem gezeigten Beispiel eine Ausnehmung in der Halteplatte 5 ist. In diese können entsprechend ausgestaltete dosenseitige Signalkabelanschlussteile 7 eingerastet oder auf andere Art befestigt werden, welche mit den dosenseitigen Signalkabeln 8 verbunden werden. Die Anschlussplatte 5 weist dabei im Anschlussfeld 51 eine Öffnung oder Öffnungen auf, welche an die jeweilige Form der Signalkabelanschlussteile angepasst ist. Lediglich durch Austausch der Auschlussplatte 5 kann daher die Anschlussdose an verschiedene Anschlussteile 7 angepasst werden. Diese Anschlussteile können beliebige bekannte Anschlussteile für Signalkabel, z.B. für Glasfaserkabel, Koaxialkabel oder andere Signalkabel sein.

Bevorzugt ist es dabei, wenn das Halteteil 4 die Anschlussplatte 5 derart von der Wand bzw. dem Befestigungselement 2 absetzt, dass die Anschlussplatte einerseits beabstandet von der Wand positioniert wird, wozu auch die Abdeckung bzw. der Rahmen 3 beiträgt, und andererseits die Anschlussplatte 5 nach unten hin versetzt ist, so dass sie unterhalb der Unterkante 28 des Befestigungselementes 2 bzw. unterhalb der Unterkante des Rahmens 3 zu liegen kommt. Dies ist besonders gut aus Figur 2 ersichtlich. Auf diese Weise können die Signalkabelanschlussteile 7 weiter unten plaziert werden, was es erlaubt den Biegeradius der wandseitig verlaufenden Signalkabel möglichst gross zu halten, wie dies ebenfalls aus Figur 2 gut ersichtlich ist. Die Signalkabel 8 verlaufen dort durch die Tieferlegung der Anschlussplatte 5 innerhalb der Dose 1 und innerhalb der Wand 15 bzw. des Bechers 9 mit einem grossen Biegeradius, wie dies für Glasfaserkabel und Koaxialkabel gewünscht ist. Für Kabel, bei denen dies nicht von Belang ist, ist beispielsweise vorgesehen, dass die Anschlussplatte 5 noch in einer weiteren Position im Halteteil 4 befestigt werden kann, was durch die Schlitze 43 und 44 angedeutet ist, die eine entsprechend höher positionierte Befestigung der Anschlussplatte 5 im Halteteil 4 erlauben. Die Anschlussplatte 5 wird dabei bevorzugt rechtwinklig zur Wand bzw. zum Befestigungselement 2 positioniert. Auch ein vom rechten Winkel abweichender Winkel ist indes möglich.

Bei der Montage der Anschlussdose ist es also möglich, zunächst die Anschlussplatte 5 alleine oder die Anschlussplatte 5 bereits am Halteteil 4 befestigt mit den an den Kabeln angeschlossenen Anschlussteilen 7 zu bestücken, wobei der Elektriker dabei die Kabelenden mit den Anschlussteilen 7 bzw. die Anschlussplatte 5 frei bewegen kann, um eine komfortable Installation zu ermöglichen. Danach wird das Halteteil 4 mit den nun daran angeordneten Kabelanschlussteilen 7 an dem Befestigungselement 2 befestigt, wobei dadurch zugleich die Abdeckung 3 fixiert und vorzugsweise auch positioniert wird. Das Halteteil 4 beaufschlagt im gezeigten Beispiel nur die unteren Bereiche 31 und 32 bzw. die entsprechenden Bereiche des Randes 35 der Abdeckung 3. Dies ist nur als Beispiel zu verstehen. Das Halteteil 4 könnte sich auch nach oben hin zu den Bereichen 36, 37 erstrecken und auch dort die Abdeckung 3 am Befestigungselement 2 fixieren, wozu dann im Halteteil 4 in diesem oberen Bereich ein weiteres Schraubenloch vorgesehen wäre, wodurch eine Schraubbefestigung an dem mit Gewinde versehenen Schraubenloch 23 des Befestigungselementes 2 möglich wäre. Bei dem bevorzugten gezeigten Ausführungsbeispiel hingegen erfolgt die weitere Fixierung der Abdeckung 3 in deren oberen Bereich mittels der Abdeckhaube 6, welche direkt mittels einer Schraube im Schraubenloch 63 am Befestigungsloch 23 des Befestigungselementes 2 befestigt wird und dabei die oberen Bereiche 36 und 37 der Abdeckung 3 beaufschlagt und diese auch an die Wand anpresst. Natürlich könnte auch die Abdeckung 6 anstelle der Schraubbefestigung mittels einer Verrastung befestigt werden. Falls sich das Halteteil 4 auch nach oben hin erstreckt, so kann die Abdeckhaube 6 indirekt auf die Abdeckung 3 einwirken, indem sie durch die Schraubverbindung mit dem Befestigungselement 2 auf das Halteteil drückt oder das Halteteil kann wie beschrieben oberseitig am Befestigungselement 2 befestigt sein und die Abdeckhaube 6 ist dann ihrerseits am Halteteil befestigt. Die Abdeckhaube 6 bildet eine Abdeckung für die Dose und erlaubt es deren Installation jederzeit durch Wegnahme der Abdeckhaube 6 für eine Prüfung wieder zugänglich zu machen. Die Abdeckhaube 6 ist bevorzugterweise mit einem Beschriftungsfeld 61 versehen, in welchem eine Etikette 65 angeordnet werden kann, welche von einem durchsichtigen Teil 66 abgedeckt wird. Wie in Figur 2 ersichtlich, erstreckt sich die Abdeckhaube so weit nach unten, dass sie die Anschlussplatte 5 abdeckt. Ein Kabel, das mit der Hausinstallation verbunden werden soll, wird mit seinem Stecker von unten her in das Signalkabelanschlussteil 7 eingesteckt, wie dies in Figur 2 mit dem nur angedeuteten Stecker 7'dargestellt ist.

Figur 4 zeigt einen Montagerahmen 10 mit Rastteilen 11, welcher zum Einrasten in an sich bekannte Unterflur-, Bodentank- und Bödendoseninstallationen vorgesehen ist. Solche Installationen sind insbesondere bei Bürobauten mit Doppelboden gebräuchlich und befinden sich im Hohlraum zwischen dem begehbaren Boden und dem jeweiligen Gebäudeboden. Bevorzugterweise wird nun so ein Montagerahmen 10 im Satz mit der erfindungsgemässen Dose angeboten, wobei der Montagerahmen 10 auf die Anschlussplatte 5 der Dose abgestimmt ist, so dass diese Anschlussplatte anstelle des Einsetzens im Halteteil 4 in den Montagerahmen 10 eingesetzt werden kann. Dieselbe Anschlussplatte 5, mit den in Figur 4 nicht dargestellten signalkabelanschlussteilspezifischen Öffnungen und Befestigungsmitteln kann dabei wahlweise in die Anschlussdose oder in den Montagerahmen des Montagesets eingesetzt werden. Auf diese Weise ist eine Anpassung an möglichst viele vorkommende Installationssituationen auf einfache Weise möglich.

## Patentansprüche

1. Anschlussdose (1) für Signalkabel, mit einer in dieser Dose (1) gehaltenen Anschlussplatte (5) zur Aufnahme dosenseitiger Signalkabelanschlussteile (7), einem wandseitigen oder kabelkanalseitigen Befestigungselement (2) und einer frontseitigen Abdeckhaube (6), wobei die Anschlussplatte (5) an einem vom Befestigungselement (2) separaten Halteteil (4) angeordnet ist, welches an dem Befestigungselement befestigbar ist, **dadurch gekennzeichnet, dass** das Halteteil (4) zur Fixierung einer separaten, das Befestigungselement (2) übergreifenden und abdeckenden, hinter der frontseitigen Abdeckhaube (6) liegenden Abdeckung (3) in Form eines Abdeckrahmens (3) oder einer Aufputzkappe (3, 33) ausgestaltet ist, so dass die Abdeckung (3) fixiert ist, wenn das Halteteil (4) am Befestigungselement (2) befestigt ist.

2. Anschlussdose nach Anspruch 1, **dadurch gekennzeichnet, dass** diese als Unterputzdose oder Kabelkanaldose ausgestaltet ist, wobei das Befestigungselement eine, vorzugsweise metallene, Befestigungsplatte (2) und die Abdeckung ein Abdeckrahmen (3) ist.

3. Anschlussdose nach Anspruch 1, **dadurch geKennzeichnet, dass** diese als Aufputzdose ausgestaltet ist, wobei das Befestigungselement ein, vorzugsweise metallener, u-förmiger Bügel (2, 27) und die Abdeckung eine Aufputzkappe (3, 33) ist.

4. Anschlussdose nach einem der Ansprüche 1 bis 3, **dadurch gekennzeichnet, dass** das Halteteil (4) ein, vorzugsweise einstückiges, Teil ist, welches winkelförmig vom Befestigungselement (2) absteht und die Anschlussplatte (5) unterhalb der Unterkante (28) des Befestigungselementes (2) positioniert, vorzugsweise rechtwinklig zum Befestigungselement (2).

5. Anschlussdose nach Anspruch 4, **dadurch gekennzeichnet, dass** das Halteteil (4) zur wahlweisen Aufnahme der Anschlussplatte (5) in verschiedenen Höhenpositionen ausgestaltet ist, wobei vorzugsweise eine Positionierung oberhalb der Unterkante (28) des Befestigungselementes (2) vorgesehen ist.

6. Anschlussdose nach einem der Ansprüche 1 bis 5, **dadurch gekennzeichnet, dass** das Halteteil an Positionierungsflächen (31, 32) der Abdeckung (3) anliegt und diese bei Befestigung am Befestigungselement (2) positioniert.

7. Anschlussdose nach einem der Ansprüche 1 bis 6, **dadurch gekennzeichnet, dass** das Halteteil (4) am Befestigungselement durch eine Schraubverbindung und/oder eine Rastverbindung befestigbar ist.

8. Anschlussdose nach einem der Ansprüche 1 bis 7, **dadurch gekennzeichnet, dass** das Halteteil (4) nur an einem ersten Fixierungsabschnitt (31, 32) der Abdekkung (3) anliegt, und dass ein weiterer Fixierungsabschnitt (36, 37) der Abdeckung (3) durch die auf der Abdeckung (3) aufliegende Abdeckhaube (6) am Befestigungselement (2) fixierbar ist.

9. Montageset umfassend eine Anschlussdose (1) mit einer Anschlussplatte (5) gemäss einem der Ansprüche 1 bis 8 sowie einen zur Aufnahme einer solchen Anschlussplatte (5) ausgestalteten Montagerahmen (10) mit Rastmitteln (11) und einer zur Aufnahme der Anschlussplatte (5) ausgestalteten Ausnehmung (12), durch welchen Montagerahmen die Anschlussplatte (5) an Unterflur-, Bodentank- und Bodendoseninstallationen befestigbar ist.

## Claims

1. Connecting box (1) for signal cables, comprising a connection plate (5) held in the box (1) for taking up signal cable connecting parts (7) of the box, a fixation element (2) for a wall or cable channel mounting, and a frontal cover hood (6), wherein the connection plate (5) is arranged on a holding part (4) separate from the fixation element (2) which is mountable to the fixation element, **characterized in that** the holding part (4) is arranged for the fixing of a separate facepiece (3) in the form of a masking frame (3) or a on wall mounted masking cap (3, 33) which overlaps and covers the fixation element (2) and lies behind the frontal cover hood (6), such that the facepiece (3) is fixed when the holding part (4) is mounted to the fixation element (2).

2. Connecting box according to claim 1, **characterized in that** it is arranged as below wall surface box or as cable channel box and wherein the fixation element is a plate (2), and preferably a plate made of metal, and the facepiece is a masking frame (3).

3. Connecting box according to claim 1, **characterized in that** it is arranged as a on wall surface box wherein the fixation element is a u-shaped bracket (2, 27), preferably made of metal, and the facepiece is a on wall mounted masking cap (3, 33).

4. Connecting box according to one of claims 1 to 3, **characterized in that** the holding part (4) is a part, that is preferably a part made of one piece, that sticks out at an angle from the fixation element (2) and positions the connection plate (5) below the lower edge (28) of the fixation element (2), and preferably in a right angle to the fixation element (2).

5. Connecting box according to claim 4, **characterized in that** the holding part (4) is arranged for selectively taking up the connection plate (5) in different height positions, wherein it is preferred that one of the positions is above the lower edge (28) of the fixation element (2).

6. Connecting box according to one of claims 1 to 5, **characterized in that** the holding part abuts on positioning surfaces (31,32) of the facepiece (3) positioning them upon fixation to the fixation element (2) .

7. Connecting box according to one of claims 1 to 6, characerized in that the holding part (4) is mountable to the fixation element by a screw-type fixation and/or by a snap-in-type fixation.

8. Connecting box according to one of claims 1 to 7, **characterized in that** the holding part (4) only abuts to a first fixation section of the facepiece (3) and that a further fixation section (36, 37) of the facepiece (3) is fixable to the fixation element (2) by the cover hood (6) abutting on the facepiece (3).

9. Mounting set comprising a connecting box (1) with a connection plate (5) according to one of claims 1 to 8 as well as a mounting frame (10) for taking up such a connection plate (5) and being provided with snap-in means (11) and a hole (12) for taking up the connection plate (5), by which mounting frame the connection plate (5) is fixable to below surface box installations or floor tank installations or floor box installations.

## Revendications

1. Boîte de raccordement pour des câbles de signalisation, comportant une plaque de raccordement (5) maintenue dans cette boîte (1) et destinée à recevoir des raccords de câbles de signalisation (7) côté boîte, un élément de fixation (2) côté mur ou côté caniveau et un couvercle (6) frontal, la plaque de raccordement (5) se trouvant sur une pièce de retenue (4) séparée de l'élément de fixation (2) et susceptible d'être fixée à l'élément de fixation,
**caractérisée en ce que** la pièce de retenue (4) est conçue pour fixer, sous forme d'un cadre de recouvrement (3) ou d'une plaque non encastrée (3, 33), un recouvrement (3) séparé qui chevauche et recouvre l'élément de fixation (2) et qui se trouve à l'arrière du couvercle (6) frontal de sorte que le recouvrement (3) est maintenu quand la pièce de retenue (4) est fixée à l'élément de fixation (2).

2. Boîte de raccordement selon la revendication 1, **caractérisée en ce qu'**elle se présente comme une boîte encastrée ou une boîte de caniveau, l'élément de fixation étant une plaque de fixation (2) de préférence métallique et le recouvrement un cadre de recouvrement (3).

3. Boîte de raccordement selon la revendication 1, **caractérisée en ce qu'**elle se présente comme une boîte non encastrée, l'élément de fixation étant un étrier (2, 27) en U de préférence métallique et le recouvrement une plaque non encastrée (3, 33).

4. Boîte de raccordement selon l'une des revendications 1 à 3, **caractérisée en ce que** la pièce de retenue (4) est une pièce, de préférence d'un seul tenant, qui dépasse en angle de l'élément de fixation (2) et la plaque de raccordement (5) est placée au-dessous du bord inférieur (28) de l'élément de fixation (2), de préférence en angle droit par rapport à l'élément de fixation (2).

5. Boîte de raccordement selon la revendication 4, **caractérisée en ce que** la pièce de retenue (4) est conçue pour accueillir la plaque de raccordement (5) à volonté dans différentes positions en hauteur, une position se trouvant de préférence au-dessus du bord inférieur (28) de l'élément de fixation (2).

6. Boîte de raccordement selon l'une des revendications 1 à 5, **caractérisée en ce que** la pièce de retenue touche les surfaces de mise en place (31, 32) du recouvrement (3) et met celui-ci en place lors de la fixation à l'élément de fixation (2).

7. Boîte de raccordement selon l'une des revendications 1 à 6, **caractérisée en ce que** la pièce de retenue (4) peut être fixée à l'élément de fixation par un assemblage par vis et/ou par crans.

8. Boîte de raccordement selon l'une des revendications 1 à 7, **caractérisée en ce que** la pièce de retenue (4) ne touche qu'une première portion de maintien (31, 32) du recouvrement (3) et qu'une autre portion de maintien (36, 37) du recouvrement (3) peut être maintenue sur l'élément de fixation (2) par le couvercle (6) qui repose sur le recouvrement (3).

9. Ensemble de montage qui comprend une boîte de raccordement (1) comportant une plaque de raccordement (5) selon l'une des revendications 1 à 8 ainsi qu'un cadre de montage (10) conçu pour accueillir une telle plaque de raccordement (5) et équipé de moyens crantés (11) et comportant une cavité (12) conçue pour accueillir la plaque de raccordement (5), ce cadre de montage permet de fixer la plaque de raccordement (5) à des installations d'encastrement, de réservoir de fond et de boîte de fond.
